**Europäisches Patentamt**

**European Patent Office**

**Office européen des brevets**

(19)

(11) Veröffentlichungsnummer : **0 240 886 B1**

(12) # EUROPÄISCHE PATENTSCHRIFT

(45) Veröffentlichungstag der Patentschrift :
**13.03.91 Patentblatt 91/11**

(51) Int. Cl.⁵ : **B32B 27/08, B32B 27/32**

(21) Anmeldenummer : **87104655.3**

(22) Anmeldetag : **30.03.87**

(54) **Siegelbare, gereckte Verbundfolien.**

(30) Priorität : **11.04.86 DE 3612160**

(43) Veröffentlichungstag der Anmeldung :
**14.10.87 Patentblatt 87/42**

(45) Bekanntmachung des Hinweises auf die
Patenterteilung :
**13.03.91 Patentblatt 91/11**

(84) Benannte Vertragsstaaten :
**AT BE CH DE ES FR GB IT LI NL SE**

(56) Entgegenhaltungen :
**EP-A- 0 000 558**
**GB-A- 2 048 903**
**US-A- 4 119 267**

(73) Patentinhaber : **Wolff Walsrode**
**Aktiengesellschaft**
**Postfach**
**W-3030 Walsrode 1 (DE)**

(72) Erfinder : **Schinkel, Ingo, Dipl.-Ing.**
**Witternstrasse 14**
**W-3030 Walsrode 1 (DE)**
Erfinder : **Klein, Rudi**
**Im Sande 86**
**W-3030 Walsrode 11 (DE)**

(74) Vertreter : **Zobel, Manfred, Dr. et al**
**c/o BAYER AG Konzernverwaltung RP**
**Patentabteilung Bayerwerk**
**W-5090 Leverkusen (DE)**

## Beschreibung

Die vorliegende Erfindung betrifft heißsiegelbare, gereckte Verbundfolien aus einer Basisschicht aus Propylenpolymeren, die auf wenigstens einer Oberfläche mit einer über eine Haftvermittlerschicht verbundene heißsiegelbare Schicht aus einem thermoplastischen Polyurethan ausgerüstet ist, und die sich hervorragend als Verpackungsmaterial eignen.

Die Herstellung von heißsiegelbaren, gereckten Verbundfolien aus Polyolefinen und Polyurethanen ist noch nicht bekannt. In der deutschen Patentschrift 2 311 365 wird zwar die Herstellung von Mehrschichtfolien, aber nicht von Verbundfolien, aus Polyolefinen und Polyurethanen mit Hilfe des Folienblasverfahrens beschrieben ; dabei wird aber nur zur Vermeidung des Warmverklebens mit der Polyurethanfolie eine Trennschicht aus einem thermoplastischen Polyolefin coextrudiert und diese Trennschicht spätestens vor der Verarbeitung von der Polyurethanfolie, mit der sie nur lose verbunden ist, wieder abgezogen.

Aus dieser Lehre konnte man daher keine Anregung entnehmen, Verbundfolien aus Propylenpolymeren und thermoplastischen Polyurethanenelastomeren herzustellen, die sich aufgrund ihres Aussehens und ihrer Siegelung bei niedrigen Temperaturen hervorragend als Verpackungsmoterial eignen.

Gegenstand der Erfindung sind daher mindestens monoaxial gereckte, heißsiegelbare Verbundfolien mit einer Basisschicht aus einem Propylenpolymeren, die auf mindestens einer Oberfläche mit einer über eine Haftvermittlerschicht verbundenen Heißsiegelschicht aus einem thermoplastischen Polyurethanelastomeren ausgerüstet ist.

Vorzugsweise kann auch die andere Oberfläche der Basisschicht eine Kombination aus einer Haftvermittlerschicht und einer außenliegenden heißsiegelbaren Schicht aus einem thermoplastischen Polyurethanelastomeren aufweisen. Vorzugsweise sind dann beide Oberflächen der Basisschicht mit einer identischen Kombination ausgerüset. Statt dessen kann gegebenenfalls aber auch die zweite Oberfläche der Basisschicht mit einer Heißsiegelschicht aus einem bekannten Heißsiegelmaterial wie z.B. einem α-Olefin, insbesondere einem Polyethylen oder einem PropylenEthylen-Copolymeren oder mit einer Mischung der genannten Polymeren ausgerüstet sein.

Die Basisschicht der erfindungsgemäßen heißsiegelbaren Verbundfolien besteht vorzugsweise aus einem Propylenpolymeren, das bis zu höchstens 10 Gew.-% ein weiteres α-Olefin mit höchstens 8 C-Atomen, vorzugsweise Ethylen, enthält. Vorzugsweise wird ein isotaktisches Polypropylen mit einer Dichte von 0,9 bis 0,91 g/cm³ und einem Schmelzflußindex von 1 -4 g/cm bei 230°C/21,6 N (nach DIN 53 735) verwendet.

Mindestens eine Außenschicht der erfindungsgemäßen Verbundfolien ist aus wenigstens einem thermoplastischen Polyurethanelastomeren aufgebaut, vorzugsweise aus einem überwiegend linearen thermoplastischen Polyurethanelastomeren, dessen Polyolkomponente ein Polyester oder Polyether ist, und die eine Shore-Härte von vorzugsweise 7595 A, besonders bevorzugt 85 - 95 A aufweist. Entsprechende thermoplastische Polyurethanelastomere sind in Vieweg "Kunststoffhandbuch", Band VII, "Polyurethane" 1966, Seiten 287 ff. und 1983, Seiten 428 ff. beschrieben.

Zur Herstellung der Haftvermittlerschicht sind vorzugsweise Copolymerisate des Ethylens mit einer α, ß-einfach ungesättigten Mono- oder Dicarbonsäure geeignet. Insbesondere sind dies Copolymerisate aus Ethylen und Acrylsäure und gegebenenfalls Acrylsäurederivaten wie Acrynitril oder Acrylsäureester, deren Esterkomponente aus $C_1$-$C_4$ besteht. Die Copolymerisate enthalten vorzugsweise 1 bis 20 Gew.-% der Acrylsäure und gegebenenfalls Acrylsäurederivate, insbesondere 3 bis 12 Gew.-% der Acrylsäure bzw. Acrylsäurederivate. Besonders bevorzugt werden Copolymerisate mit 6 bis 9 Gew.-% Acrylsäure und Alkylacrylaten, wie Ethylacrylat eingesetzt. Die Copolymerisate aus Ethylen und wenigstens einer α, ß-ungesättigten Dicarbonsäure oder deren Derivate wie Maleinsäure, Fumarsäure, Itaconsäure oder deren Säureanhydride, Säureester oder Säureamide, oder Polyolefine, die die genannten ungesättigten Carbonsäuren aufgepfropft enthalten, sind ebenso geeignet. Weiterhin kommen auch Copolymerisate von Ethylen mit Vinylacetat, die vorzugsweise 2 bis 33 Gew.-% Vinylacetat, insbesondere 14 bis 28 Gew.-% Vinylacetat, enthalten und die gegebenenfalls verseift sein können, in Frage. Der Schmelzindex dieser Copolymerisate sollte im Bereich von 2 bis 9, bevorzugt 3 bis 7 g/10 Min. bei 190°C/21,6 N, gemessen nach DIN 53 735, liegen. Es ist auch möglich, die Haftvermittlerschichten aus Mischungen der genannten Polymeren, insbesondere aus Mischungen der genannten Polyolefine und modifizierten Polyolefine herzustellen.

Wenn nicht auch die andere Oberfläche der Basisschicht mit einer Haftvermittlerschicht und einer außenliegenden heißsiegelbaren Schicht aus einem thermoplastischen Polyurethanelastomeren ausgerüstet ist, so kann diese Oberfläche gegebenenfalls eine Siegelschicht aus bekannten Heißsiegelmaterialien wie z.B. Polyethylenen hoher Dichte oder statistische Ethylen-Propylen-Copolymeren, mit wenigstens 4 Gew.-%. Ethylen, aufweisen. Die Dichte der Siegelschichtpolymeren sollte vorzugsweise im Bereich von 0,895 bis 0,960 g/cm³ und deren Schmelzflußindex im Bereich von 1 bis 7 g/10 Min. bei 190°C/21,6 N, gemessen nach DIN 53 735; liegen.

2

Die erfindungsgemäßen Verbundfolien können in wenigstens einer ihrer Schichten die bekannten Additive wie Antistatika, Gleitmittel und Antiblockmittel in den üblichen Mengen enthalten.

Die Herstellung der erfindungsgemäßen Verbundfolien erfolgt nach üblichen Verfahren wie Laminierung, Beschichtung oder (Co)Extrusion.

Die erfindungsgemäßen Verbundfolien werden mindestens monoaxial gerecht, vorzugsweise aber einer biaxialen Reckung unterworfen. Dabei sollte bei der Längsreckung ein Verhältnis von 5 : 1 bis 9 : 1 und bei der Querreckung ein Verhältnis von 7 : 1 bis 10 : 1 eingehalten werden.

In den erfindungsgemäßen Verbundfolien sollte die Basisfolie aus Propylenpolymeren vorzugsweise eine Dicke von 15 bis 80 µm, die heißsiegelbare Schicht aus Polyurethan vorzugsweise eine Dicke von 0,5 bis 8 µm, besonders bevorzugt 1 bis 3 µm, die dazwischenliegende Haftvermittlerschicht eine Dicke von 0,3 bis 0,8 µm, besonders bevorzugt 0,4 bis 0,6 µm, und die gegebenenfalls auf der anderen Oberfläche der Basisschicht befindliche weitere heißsiegelbare Schicht eine Dicke von 0,5 bis 1,5 µm, besonders bevorzugt um 1 µm aufweisen.

Da die erfindungsgemäßen Verbundfolien nicht nur eine gute Optik, sondern auch eine hohe Abriebfestigkeit und große Haftfähigkeit (Rutschfestigkeit) besitzen und gegenüber den bekannten Mehrschichtfolien auf Basis von Propylenpolymeren einen verbesserten Weiterreißwiderstand aufweisen, eignen sie sich hervorragend als Verpackungsfolien, insbesondere dort wo eine rutschfeste Stapelung der verpackten Materialien notwendig ist, und auch zur Verpackung solcher Güter, bei denen das Verpackungmaterial einer hohen mechanischen Beanspruchung ausgesetzt wird und deshalb eine hohe Abriebfestigkeit und einen verbesserten Weiterreißwiderstand aufweisen muß.

In den nachfolgenden Beispielen wurde der Weiterreißwiderstand nach DIN 53 363 bestimmt. Unter der Siegelfestigkeit wird die Kraft verstanden, die erforderlich ist, um eine unter definierten Bedingungen (50 N/cm², 0,55 glatte Siegelwerkzeuge und den in der Tabelle 1 angegebenen Siegeltemperaturen) hergestellte Siegelnaht zu trennen. Die Siegelfestigkeit wird in Newton (N) angegeben und auf einen 15 mm breiten Prüfstreifen bezogen.

## Beispiel 1

Nach üblichem Verfahren werden auf eine Oberfläche der Basisfolie aus Polypropylen mit einer Dichte von 0,905 g/cm³, dem Schmelzindex von 3,3 g/10 Min. bei 230°C/21,6 N und dem Schmelzbereich von 160-166°C eine Haftvermittlerschicht aus einem AcrylsäurethylacrylatCopolymerisat mit einem Acrylsäuregebalt von 9 Gew.-%, einer Dichte von 0,940 g/cm³ und dem Schmelzindex von 10 g/Min. bei 190°C/21,6 N und auf die Haftvermittlerschicht eine heißsiegelbare Außenschicht aus einem thermoplastischen Polyurethanelastomeren auf Polyesterbasis mit einer Shore-Härte von 93 A (DIN 53 505) und einer Dichte von 1,19 g/cm³ (DIN 53 479) und auf der anderen Oberfläche der Basisschicht eine Schicht aus einem statistischen Ethylen/Propylen-Copolymerisat mit 4,5 Gew.-% Ethylen, einer Dichte von 0,90 g/cm³ und einem Schmelzindex von 5 g/10 Min. bei 230°C/21,6 N aufgebracht und in bekannter Weise verstreckt, so daß eine Verbundfolie mit einer Längsreckung im Verhältnis 5 : 1 und einer Querreckung im Verhältnis 10 : 1 erhalten wird. In der dabei resultierenden Verbundfolie hat die Basisfolie eine Dicke von 15,9 µm, die Polyurethanschicht eine Dicke von 2 µm, die darunterliegende Haftvermittlerschicht eine Dicke von 0,6 µm und die Ethylen/Propylen-Copolymerisatschicht eine Dicke von 1,1 µm. Die einzelnen Schichten der Verbundfolie lassen sich nicht mechanisch trennen. Die Eigenschaften der Verbundfolie sind in Tabelle 1 aufgeführt.

## Beispiel 2 (Vergleich)

Wie in Beispiel 1 angegeben, wird eine Verbundfolie hergestellt, wobei aber beide Oberflächen der Basisfolie aus Polypropylen mit einer beißsiegelbaren Schicht aus Ethylen/Propylen-Copolymerisat versehen werden. Die verwendeten Polymerisate haben die im Beispiel angegebenen Eigenschaften.

Die Meßergebnisse sind in Tabelle 1 eingetragen.

| | Beispiel 1 | Beispiel 2 (Vergleich) |
|---|---|---|
| Folienaufbau: | E/P-Copo | E/P-Copo |
| | PP | PP |
| | AEA | E/P-Copo |
| | PU | |
| Weiterreißwiderstand N/mm | | |
| DIN 53 363    längs | 21,6 | 15,0 |
| quer | 12,5 | 8,0 |
| Siegelfestigkeit   N/15 mm | PU-Schicht gegen PU-Schicht | E/P-Copo gegen E/P-Copo |
| bei Siegeltemp.°C   85 | 0,96 | - |
| 90 | 1,81 | - |
| 100 | 2,59 | - |
| 110 | 3,30 | - |
| 120 | 3,14 | 2,0 |
| 130 | 2,38 | 2,6 |

E/P-Copo = Ethylen/Propylen-Copolymerisat mit 4,5 Gew.-% E

AEA = Acrylsäure/Ethylacrylat-Copolymerisat

PP = Polypropylen

PU = Polyurethan

EP 0 240 886 B1

## Ansprüche

1. Mehrschichtige Folie mit einer Basisschicht aus einem Propylenpolymeren und einer Schicht aus einem thermoplastischen Polyurethanelastomeren, dadurch gekennzeichnet, daß die Folie eine mindestens monoaxial gereckte heißsiegelbare Verbundfolie ist, wobei die Basisschicht auf wenigstens einer ihrer Oberflächen mit einer Haftvermittlerschicht und einer heißsiegelbaren Schicht aus dem thermoplastischen Polyurethanelastomeren ausgerüstet ist.

2. Verbundfolien nach Anspruch 1, dadurch gekennzeichnet, daß die Basisschicht auf ihrer anderen Oberfläche auch mit einer Kombination aus einer Haftvermittlerschicht und einer heißsiegelbaren Schicht aus einem thermoplastischen Polyurethanelastomeren ausgerüstet ist.

3. Verbundfolien nach Anspruch 1, dadurch gekennzeichnet, daß die Basisschicht auf ihrer anderen Oberfläche mit einer heißsiegelbare Schicht aus wenigstens einem α-Olefin ausgerüstet ist.

4. Verbundfolien nach wenigstens einem der vorhergehenden Ansprüche, dadurch gekennzeichnet, daß die Basisfolie aus Propylenpolymeren eine Dicke von 15 bis 80 μm, die heißsiegelbare Schicht aus Polyurethan eine Dicke von 0,5 bis 8 μm und die dazwischenliegende Haftvermittlerschicht eine Dicke von 0,3 bis 0,8 μm aufweist.

## Claims

1. Multilayer film having a base layer of a propylene polymer, and a layer of a thermoplastic polyurethane elastomer, characterized in that the film is a heatsealable composite film drawn at least uniaxially, the base layer being provided on at least one of its surfaces with an adhesion promoter layer and a heat-sealable layer of the thermoplastic polyurethane elastomer.

2. Composite films according to Claim 1, characterized in that the base layer is also provided on its other surface with a combination of an adhesion promoter layer and a heat-sealable layer of a thermoplastic polyurethane elastomer.

3. Composite films according to Claim 1, characterized in that the base layer is provided on its other surface with a heat-sealable layer of at least one α-olefin.

4. Composite films according to at least one of the preceding claims, characterized in that the base film of propylene polymers has a thickness of 15 to 80 μm, the heat-sealable layer of polyurethane has a thickness of 0.5 to 8 μm, and the adhesion promoter layer lying between them has a thickness of 0.3 to 0.8 μm.

## Revendications

1. Feuille multicouche avec une couche de base composée d'un polymère de polypropylène et une couche d'un élastomère thermoplastique de polyuréthanne, caractérisée en ce que la feuille est une feuille composite thermoscellable étirée dans une direction axiale au moins, la couche de base étant pourvue sur au moins une de ses faces d'une couche d'adhérence et d'une couche d'élastomère thermoplastique de polyuréthanne thermoscellable.

2. Feuille composite selon la revendication 1, caractérisée en ce que la couche de base est pourvue également sur son autre face d'une combinaison d'une couche d'adhérence et d'une couche thermoscellable d'élastomère thermoplastique de polyuréthanne.

3. Feuille composite selon la revendication 1, caractérisée en ce que la couche de base est pourvue sur son autre face d'une couche thermoscellable comportant au moins une α-oléfine.

4. Feuille composite selon l'une des revendications précédentes au moins, caractérisée en ce que la feuille de base en polymère de polypropylène présente une épaisseur de 15 à 80 μm, la couche thermoscellable en polyuréthanne une épaisseur de 0,5 à 8 μm et la couche d'adhérence intermédiaire une épaisseur de 0,3 à 0,8 μm.